(19) Europäisches Patentamt
European Patent Office
Office européen des brevets

(11) EP 3 238 690 B1

# (12) EUROPEAN PATENT SPECIFICATION

(45) Date of publication and mention of the grant of the patent:
**14.09.2022 Bulletin 2022/37**

(21) Application number: **16743295.4**

(22) Date of filing: **25.01.2016**

(51) International Patent Classification (IPC):
***A61J 1/10*** *(2006.01)* ***C08L 27/06*** *(2006.01)*

(52) Cooperative Patent Classification (CPC):
(C-Sets available)
**A61J 1/10; C08K 5/12; C08L 27/06** (Cont.)

(86) International application number:
**PCT/JP2016/052018**

(87) International publication number:
**WO 2016/121692 (04.08.2016 Gazette 2016/31)**

## (54) BAG FOR MEDICAL USE

BEUTEL ZUR MEDIZINISCHEN VERWENDUNG

SAC À USAGE MÉDICAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2015 JP 2015017514**

(43) Date of publication of application:
**01.11.2017 Bulletin 2017/44**

(73) Proprietors:
- **Kawasumi Laboratories, Inc.**
  **Saiki-shi, Oita 876-0121 (JP)**
- **Japan As Represented By Director General Of National Institute Of Health Sciences**
  **Tokyo 158-8501 (JP)**

(72) Inventors:
- **HAISHIMA, Yuji**
  **Tokyo 158-8501 (JP)**
- **FUKUI, Chie**
  **Tokyo 158-8501 (JP)**
- **KAWAKAMI, Tsuyoshi**
  **Tokyo 158-8501 (JP)**
- **SAKODA, Hideyuki**
  **Tokyo 158-8501 (JP)**
- **NOMURA, Yusuke**
  **Tokyo 158-8501 (JP)**
- **ISAMA, Kazuo**
  **Tokyo 158-8501 (JP)**
- **NIIMI, Shingo**
  **Tokyo 158-8501 (JP)**
- **YUBA, Toshiyasu**
  **Tokyo 108-6109 (JP)**
- **MUKAI, Tomokazu**
  **Bungo-ono-shi**
  **Oita 879-7153 (JP)**
- **SEI, Mariko**
  **Bungo-ono-shi**
  **Oita 879-7153 (JP)**

(74) Representative: **Brevalex**
**95, rue d'Amsterdam**
**75378 Paris Cedex 8 (FR)**

(56) References cited:
**EP-A1- 3 124 540**
**JP-A- 2003 147 142**
**JP-A- 2004 002 695**
**JP-A- 2014 223 182**
**JP-A- 2016 006 145**

EP 3 238 690 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/12, C08L 27/06**

## Description

TECHNICAL FIELD

The present invention relates to a bag for medical use.

BACKGROUND ART

The properties required for a bag for medical use such as a blood bag include, for example, flexibility to facilitate an operation such as blood collection, blood transfusion or blood component separation, strength for these operations, low water vapor permeability, heat resistance, and safety. Since soft polyvinyl chloride containing a plasticizer almost satisfies the required performances described above, it is currently the mainstream of a material for the bag for medical use.

In the soft polyvinyl chloride, it is essential to use a plasticizer in order to impart flexibility to the bag for medical use and, for example, from 50 to 70 parts by mass of a phthalic ester, for example, di(2-ethylhexyl)phthalate (DEHP) is used with respect to 100 parts by mass of a polyvinyl chloride resin.

It is known, for example, that when DEHP is used as a plasticizer for a blood bag, DEHP elutes over time from the blood bag into the blood at storage of the blood and it has a cell membrane protective function which protects a cell membrane of a surface of various cells of the blood components, in particular, red blood cells (see, for example, Non-Patent Documents 1 and 2).

However, it has been confirmed that DEHP has testicular toxicity in rodents and there is a tendency to refrain from using it around the world. Therefore, higher safety in blood transfusion has been desired for patients in need of blood transfusion.

On the other hand, for example, a blood bag for storing plasma is usually stored in a low temperature environment of -20°C or below, that is, in a frozen state. Further, also in the field of regenerative medicine, body fluid, for example, umbilical cord blood or bone marrow fluid or cell solution is filled in a bag for medical use having flexibility and stored in a frozen state. However, the bag for medical use made of vinyl chloride resin is inferior in impact resistance at low temperature storage so that there is a problem in that it is damaged when it is accidentally dropped or collided.

In addition, in Patent Document 1, there is disclosed a freezing bag for medical use which is not damaged even at very low temperature of -196°C and is composed of a three-layer film formed by welding both surfaces of an ultrahigh molecular weight polyethylene film with a film of thermoplastic resin which has a melting point lower than that of the ultrahigh molecular weight polyethylene and is compatible with the ultrahigh molecular weight polyethylene.

PRIOR ART DOCUMENT

PATENT DOCUMENT

Patent Document 1: JP-A-2005-193013

NON-PATENT DOCUMENT

Non-Patent document 1: Larry J. Dumont et al., Exploratory in vitro study of red blood cell storage containers formulated with an alternative plasticizer, Transfusion, Vol.52(7), pp. 1439 - 1445 (2012)

Non-Patent document 2: Yuji Haishima et al., Study on the effect of plasticizers to red cells survival, The 33rd Annual Meeting of the Japanese Society for Biomaterials, Poster Presentation Summary, page 79, November 2011

SUMMARY OF THE INVENTION

PROBLEMS THAT THE INVENTION IS TO SOLVE

An object of the present invention is to provide a bag for medical use capable of satisfying an excellent low temperature impact resistance and higher safety at the same time in bags made of vinyl chloride resin used in the medical field.

MEANS FOR SOLVING THE PROBLEMS

As a result of the intensive investigations, the inventors have found that the object described above can be achieved by blending a specific plasticizer with a vinyl chloride resin to complete the present invention.

Specifically, the present invention includes [1] to [5] described below and defined in the appended set of claims.

[1] A bag for medical use made of a resin composition containing a vinyl chloride resin and, as plasticizers, at least a 4-cyclohexene-1,2-dicarboxylic acid dinonyl ester represented by the formula (1) shown below.

[Chem. 1]

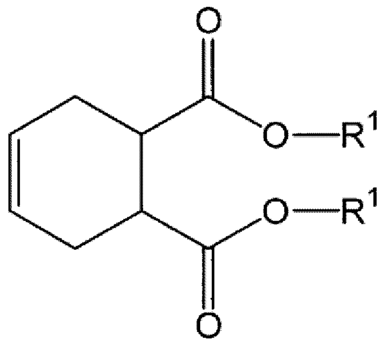

(1)

(In the formula (1), $R^1$s each independently represent a straight-chain or branched nonyl group) and a bis(2-ethylhexyl)-4-cyclohexene-1,2-dicarboxylate.

[2] The bag for medical use as described in [1] above, in which from 1 to 80 parts by mass of the 4-cyclohexene-1,2-dicarboxylic acid dinonyl ester is blended with 100 parts by mass of the vinyl chloride resin.

[3] The bag for medical use as described in [1] or [2] above, in which the vinyl chloride resin has a polymerization degree of from 480 to 4,100.

[4] The bag for medical use as described in [1] above, in which from 1 to 80 parts by mass of the bis(2-ethylhexyl)-4-cyclohexene-1,2-dicarboxylate is blended with 100 parts by mass of the vinyl chloride resin.

[5] A use of the bag for medical use as described in any one of [1] to [4] above, as a blood bag for storing a blood component.

ADVANTAGE OF THE INVENTION

The bag for medical use according to the present invention not only has impact resistance at low temperature storage of -20°C or below but also can ensure higher safety by blending, as a plasticizer, 4-cyclohexene-1,2-dicarboxylic acid dinonyl ester represented by formula (1) with a vinyl chloride resin.

JP-A-2014-80631 discloses 4-cyclohexene-1,2-dicarboxylic acid dinonyl ester, but the 4-cyclohexene-1,2-dicarboxylic acid dinonyl ester described in the publication is one used for lubricant base oil, for example, grease base oil, base oil for metal processing, base oil for hydraulic oil, compressor base oil, or gear base oil and, technical ideas for achieving the low temperature impact resistance and excellent safety by using 4-cyclohexene-1,2-dicarboxylic acid dinonyl ester as a plasticizer for a bag for medical use is neither disclosed nor suggested.

EP-A-3 124 540, which is prior art only according to article 54(3)CBE, discloses vinyl chloride-based compositions useful in many fields including medical bags, which comprise a non-phthalate ester as a plasticizer such as 4-cyclohexene-1,2-dicarboxylic acid dinonyl ester.

BRIEF DESCRIPTION OF THE DRAWINGS

[Fig.1] Fig. 1 is a graph showing the test results of food consumption in rats.

[Fig.2] Fig. 2 is a graph showing the test results of food consumption in rats.

[Fig.3] Fig. 3 is a graph showing the test results of body weight gain in rats.

[Fig.4] Fig. 4 is a graph showing the test results of sperm count in rats.

[Fig.5] Fig. 5 is a graph showing the results of hemolysis rate in the case of using MAP solution as a red cells preservation.

[Fig.6] Fig. 6 is a graph showing the results of hemolysis rate in the case of using SAGM solution as a red cells preservation.

MODE FOR CARRYING OUT THE INVENTION

Embodiments of the present invention will be described in more detail hereinafter.

In the specification, "mass" shall mean "weight".

The bag for medical use according to the present invention is one made of a resin composition containing, as a plasticizer, at least 4-cyclohexene-1,2-dicarboxylic acid dinonyl ester (hereinafter, also simply referred to as "DL9TH") represented by formula (1) shown below blended with a vinyl chloride resin.

[Chem. 2]

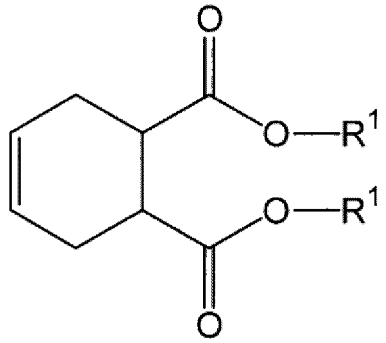

(1)

(In the formula (1), $R^1$'s each independently represent a straight-chain or branched nonyl group.)

(Vinyl chloride resin)

The resin composition for forming the bag for medical use according to the present invention contains a vinyl chloride resin as a base material. The vinyl chloride resin includes a polyvinyl chloride resin and in addition, a copolymer of vinyl chloride with other copolymerizable vinyl monomer. The other vinyl monomer includes, for example, ethylene, propylene, a maleic acid ester, vinyl acetate, (meth)acrylic acid, and a (meth)acrylic acid ester.

The average polymerization degree of the vinyl chloride resin is preferably from 480 to 4,100, more preferably from 1,000 to 2,500, from the standpoint of good processability of the resulting resin composition. The average polymerization degree is measured in accordance with JIS K6751.

(Plasticizer)

The plasticizer used in the bag for medical use according to the present invention is characterized by using 4-cyclohexene-1,2-dicarboxylic acid dinonyl ester (DL9TH) represented by formula (1) shown above. DL9TH is excellent in the compatibility with the vinyl chloride resin and also can improve the impact resistance of the resulting bag for medical use at low temperature storage.

DL9TH includes, for example, "SANSO CIZER DL9TH", trade name, produced by New Japan Chemical Co., Ltd. (SANSO CIZER is registered trademark of New Japan Chemical Co., Ltd.).

The blending amount of DL9TH is not particularly limited as long as it is blended so as to impart the desired flexibility to the bag for medical use and it is preferred to blend from 1 to 80 parts by mass relative to 100 parts by mass of the vinyl chloride resin. By blending from 1 to 80 parts by mass of DL9TH to 100 parts by mass of the vinyl chloride resin, the blending amount of DEHP with the vinyl chloride resin can be reduced (or can be made to zero) so that the sufficient low temperature impact resistance can be obtained while achieving the high safety.

The blending amount of DL9TH is more preferably from 10 to 70 parts by mass, still more preferably from 30 to 60 parts by mass, to 100 parts by mass of the vinyl chloride resin.

(Other plasticizers)

A plasticizer other than DL9TH is used, namely bis(2-ethylhexyl) 4-cyclohexene-1,2-dicarboxylate (DOTH).

The blending amount thereof is, for example, from 1 to 80 parts by mass, preferably from 3 to 60 parts by mass,

to 100 parts by mass of the vinyl chloride resin.

DOTH elutes over time into a living body component filled in the bag for medical use and acts on a cell membrane of the living body component to make the cell membrane less liable to be broken, thereby increasing the cytoprotective effect. Therefore, in the case of using as a blood bag, it is possible to suppress the hemolysis of red blood cell.

Further, in the present invention, various known additives, for example, a processing auxiliary (for example, a stabilizer or a lubricant) may be blended in the resin composition for forming the bag for medical use, if desired, within the range which does not impair the effects of the present invention.

The production method of the bag for medical use is not particularly limited and it may follow a conventional method. For example, the bag for medical use according to the present invention can be produced by preparing pellets composed of the resin composition, forming a sheet by a T-die forming method using an extruder, cutting the resulting sheet into a desired size, and conducting bag-making. In addition, it goes without saying that the resin composition can be formed into the bag for medical use by a known method (for example, an inflation forming method or a heat press method) other than the T-die forming method.

The thickness of the sheet constituting the bag for medical use is ordinarily from 0.1 to 1 mm, preferably from 0.3 to 0.5 mm, from the standpoint of the effects of the present invention.

The bag for medical use according to the present invention is able to be applied to a blood bag for storing blood components (for example, a blood bag used for blood products, for example, red blood cell, platelet, plasma, or whole blood or an umbilical cord blood bag for storing umbilical cord blood), a bone marrow bag for storing bone marrow fluid or a bag for storing liquid in which hematopoietic stem cells and the like are cultured. Among them, it is preferably used as a bag for medical use which is to be stored, for example, in the frozen state under low temperature environment of -20°C or below, typically -20°C to -80°C.

In addition, as the blood preservation solution and the red cells preservation, conventionally known various preservation solutions can be used and they are not particularly limited. As the blood preservation solution, for example, ACD-A solution, CPD solution or CPDA solution can be used. As the red cells preservation, for example, MAP solution or SAGM solution can be used. As the representatives of the blood preservation solution and red cells preservation, an example of the composition of each of CPD solution, MAP solution and SAGM solution are shown below.

<CPD solution> Unit: w/v%

Sodium citrate hydrate: 2.63
Citric acid hydrate: 0.327
Glucose: 2.32
Sodium dihydrogen phosphate: 0.251

<MAP solution> Unit: w/v%

D-mannitol: 1.457
Adenine: 0.014
Sodium dihydrogen phosphate: 0.094
Sodium citrate hydrate: 0.150
Citric acid hydrate: 0.020
Glucose: 0.721
Sodium chloride: 0.497

<SAGM solution> Unit: w/v%

Mannitol: 0.525
Adenine: 0.017
Glucose: 0.818
Sodium chloride: 0.877

EXAMPLE

The present invention will be described further with reference to the Examples, but the present invention should not be construed as being limited to the Examples.

<Example 1: Confirmation test of low temperature impact resistance and physical property test at room temperature>

According to the blending ratio shown in Table 1 below, each component was sequentially added and kneaded at room temperature to prepare each resin composition.

Using each of the resin composition, a resin sheet having a width of 15 cm and a thickness of 0.45 mm was prepared (Samples 1 to 4).

The blending amount of plasticizer in the resin composition in Table 1 is such an amount that flexibility of the resulting resin sheets is almost equal and is such an amount that 100% modulus value measured by a tensile tester ("AUTOGRAPH AG-X" manufactured by Shimadzu Corp. (AUTOGRAPH is registered trademark of Shimadzu Corp.)) is about 10 MPa.

[Table 1]

TABLE 1 Unit: parts by mass

| Component | | Sample 1 | Sample 2 | Sample 3 | Sample 4 |
|---|---|---|---|---|---|
| Polyvinyl Chloride Resin (polymerization degree = 1,300) | | 100 | | | |
| Epoxidized Soybean Oil (ESBO) | | 8.0 | | | |
| Processing Auxiliary (*1) | | 0.5 | | | |
| Plasticizer | DL9TH | 55 | - | - | - |
| | DINCH | - | 55 | - | - |
| | DOTH | - | - | 50 | - |
| | DEHP | - | - | - | 50 |
| * 1: Processing auxiliary: heat stabilizer, lubricant | | | | | |

Using the resulting resin sheet, 5% elastic moduli in the stretching direction (MD: Machine Direction) and in the stretching vertical direction (TD: Transverse Direction) of the resin sheet were measured in -20°C environment under conditions of No. 4 test piece of the tensile impact test, 50 mm distance between chucks and 100 mm/min speed according to JIS K7127. The test was performed 5 times and the average value thereof was calculated.

Further, the elastic modulus and each of the physical properties at break point at room temperature were examined. The elastic modulus and physical properties at break point were measured according to JIS K7127.

The results are shown in Table 2. As to the 5% elastic modulus, it is meant that as the value increases, the flexibility is impaired and the impact resistance is poor.

[Table 2]

TABLE 2

| | | Sample 1 | Sample 2 | Sample 3 | Sample 4 |
|---|---|---|---|---|---|
| Plasticizer | | DL9TH | DINCH | DOTH | DEHP |
| 5% Elastic Modulus at -20°C ($N/mm^2$) | MD | 200.0 | 290.8 | 382.5 | 509.3 |
| | TD | 201.4 | 290.8 | 382.4 | 510.6 |

(continued)

| | | Sample 1 | Sample 2 | Sample 3 | Sample 4 |
|---|---|---|---|---|---|
| Plasticizer | | DL9TH | DINCH | DOTH | DEHP |
| 5% Elastic Modulus at Room Temperature ($N/mm^2$) | MD | 15.9 | 14.4 | 15.4 | 14.3 |
| | TD | 14.6 | 13.8 | 14.2 | 13.3 |
| Test Force at Break Point at Room Temperature (N) | MD | 27.4 | 32.9 | 32.0 | 30.6 |
| | TD | 24.9 | 30.2 | 30.6 | 28.3 |
| Stress at Break Point at Room Temperature ($N/mm^2$) | MD | 20.7 | 21.8 | 22.7 | 23.0 |
| | TD | 19.4 | 21.1 | 22.8 | 22.2 |
| Displacement (Strain) at Break Point at Room Temperature (%) | MD | 185.6 | 204.8 | 189.8 | 199.3 |
| | TD | 215.1 | 241.1 | 235.5 | 235.2 |

From the results shown in Table 2, it can be seen that Sample 1 in which DL9TH is blended as a plasticizer has low 5% elastic modulus in -20°C environment and is excellent in the low temperature impact resistance in comparison with Samples 2 to 4 in which other plasticizers are blended. Further, it can be seen that from the measurement results of the elastic modulus and each of the physical properties at break point at room temperature, Sample 1 is almost equivalent to Samples 2 to 4 and it sufficiently satisfies the various physical properties required for the soft polyvinyl chloride.

<Example 2: Rat sub-chronic toxicity test with focus on assessment of testicular toxicity >

To 1 kg of test diet ("CR-LPF" produced by Oriental Yeast Co., Ltd.) were added 500 mg, 5,000 mg and 10,000 mg of DL9TH to prepare Diet Samples 2 to 4, respectively. As a positive control, one in which 10,000 mg of DEHP was added to 1 kg of the test diet was termed Diet Sample 5. Further, one composed only of the test diet was termed Diet Sample 1.

Each of Diet Samples 1 to 5 was allowed to be freely fed to 4-week-old male SD rats (8 animals/group). The rats were housed two by two in breeding cages and the breeding environment was set to temperature of 24 ± 1°C, humidity of 55 ± 5%, a lightdark cycle of 12 hours each and a ventilation of about 20 times/hour.

The food consumption and body weight gain in rat were measured in each week from the start of the test and the average value thereof was calculated. The results of the food consumption in rat are shown in Fig. 1 and Fig. 2 and the results of the body weight gain in rat are shown in Fig. 3, respectively. In Fig. 1, the food consumption in rat taken on the vertical axis has a unit of [g/cage/week], and the transition of the amount of diet taken in by two rats housed in a cage per week (total food consumption on a cage basis) is shown. Further, in Fig. 2, the food consumption in rat taken on the vertical axis has a unit of [g/kg/day], and the transition of the food consumption per unit body weight, which is obtained by dividing the amount of the diet taken in by a rat per day by the body weight of the rat, is shown.

Moreover, after 13 weeks from the start of the test, decapitation and blood collection under anesthesia were performed and then histopathological analysis of the systemic various organs including the male reproductive organs was carried out according to a conventional method. The right epididymis collected at the time of the dissection was minced in phosphate buffered saline (PBS), subjected to Hoechst staining and sperm count was measured by image analysis. The results are shown in Fig. 4.

From the results shown in Fig. 1 and Fig. 2, the food consumption in rats (DL9TH administration group) fed with Diet Sample 2 (diet containing 500 mg of DL9TH), Diet Sample 3 (diet containing 5,000 mg of DL9TH) and Diet Sample 4 (diet containing 10,000 mg of DL9TH) was equivalent to that in rats (control group) fed with Diet Sample 1. On the other hand, it was confirmed that the food consumption in rats (DEHP administration group) fed with Diet Sample 5 (diet containing DEHP) significantly decreased in comparison with that in the control group until 4 weeks after the initiation of administration and then it changed similarly to that in the control group. Further, from the results of Fig. 3, it was confirmed that the body weight gain in the DL9TH administration group was equivalent to that in the control group, but in contrast the body weight gain in the DEHP administration group was significantly decreased in comparison with that in the control group. With respect to the DL9TH administration group, a significant change in the systemic various organs including the male reproductive organs was not observed even in the macroscopic observation and organ weight measurement at the time of the dissection.

Moreover, from the results of Fig. 4, it was confirmed that the sperm count in the DL9TH administration group

was equivalent to that in the control group, but in contrast the sperm count in the DEHP administration group was decreased to about 1/100 in comparison with that in the control group. As the macroscopic findings at the time of the dissection, significant atrophy of the testis and epididymis and enlargement of the liver were observed only in the DEHP administration group.

As described above, as long as judging from the macroscopic findings at the time of the dissection, the measurement result of sperm count and the like, it was confirmed that the DL9TH does not exhibit significant testicular toxicity.

<Example 3: Confirmation test of low temperature impact resistance>

According to the blending ratio shown in Table 3 below, each component was sequentially added and kneaded at room temperature to prepare each resin composition.

Using each of the resin composition, a resin sheet having a width of 15 cm and a thickness of 0.45 mm was prepared (Samples 5 to 11).

The blending amount of plasticizer in the resin composition in Table 3 is such an amount that flexibility of the resulting resin sheets is almost equal and is such an amount that 100% modulus value measured by the tensile tester described in Example 1 is about 10 MPa.

[Table 3]

TABLE 3 (Unit: parts by mass)

| Component | | Sample 5 | Sample 6 | Sample 7 | Sample 8 | Sample 9 | Sample 10 | Sample 11 |
|---|---|---|---|---|---|---|---|---|
| Polyvinyl Chloride Resin (polymerization degree = 1,300) | | 100 | | | | | | |
| Epoxidized Soybean Oil (ESBO) | | 8.0 | | | | | | |
| Processing Auxiliary (* 1) | | 0.5 | | | | | | |
| Plasticizer | DL9TH | 11 | 27.5 | 44 | 27.5 | 44 | - | - |
| | DINCH | 44 | 27.5 | 11 | - | - | 44 | 27.5 |
| | DOTH | - | - | - | 25 | 10 | 10 | 25 |
| * 1: Processing auxiliary: heat stabilizer, lubricant | | | | | | | | |

Using the resulting resin sheet, 5% elastic moduli in the stretching direction (MD) and in the stretching vertical direction (TD) of the resin sheet were measured in -20°C environment in the same manner as in Example 1. The test was performed 5 times and the average value thereof was calculated. The results are shown in Table 4.

[Table 4]

TABLE 4

| | | Sample 5 | Sample 6 | Sample 7 | Sample 8 | Sample 9 | Sample 10 | Sample 11 |
|---|---|---|---|---|---|---|---|---|
| 5% Elastic Modulus at -20°C ($N/mm^2$) | MD | 263.2 | 231.1 | 206.9 | 266.4 | 213.9 | 310.9 | 351.4 |
| | TD | 257.4 | 229.1 | 209.3 | 266.0 | 212.3 | 304.5 | 349.8 |

From the results shown in Table 4, it can be seen that Samples 5 to 9 in which DL9TH is used in combination with other plasticizer have low 5% elastic modulus in - 20°C environment and is excellent in the low temperature impact resistance in comparison with Samples 10 and 11 in which plasticizers other than DL9TH are used in combination.

<Example 4: Confirmation test of hemolysis rate and plasticizer elution amount>

(Composition of red cells concentrates)

In the test, red cells concentrates shown below were used. The red cells concentrates are prepared by mixing 200 mL of human blood mixed with 28 mL of blood preservation solution (CPD solution) or 400 mL of human blood mixed with 56 mL of blood preservation solution with 46 mL or 92 mL of red cells preservation (MAP solution or SAGM solution described above) and are a dark red liquid containing a small amount of the blood preservation solution. When they are allowed to stand, they separate into a precipitate layer mainly composed of red blood cells and a colorless liquid layer.

(GC-MS/MS analysis conditions)

Various conditions of GC-MS/MS analysis are shown in Table 5.

[Table 5]

TABLE 5: GC-MS/MS Analysis Conditions

| Objective Substance | Retention Time (min) | $Q_1$ (m/z) | $Q_2$ (m/z) | Collision Energy (V) | LOD (ng/mL) | LOQ (ng/mL) | MAP | | SAGM | |
|---|---|---|---|---|---|---|---|---|---|---|
| | | | | | | | Recovery Rate (%) | CV (%) | Recovery Rate (%) | CV (%) |
| DEHP | 14.54 | 167 | 149 | 4 | 0.031 | 0.10 | 93 | 0.98 | 94 | 1.9 |
| DINCH | 14.60-16.60 | 155 | 109 | 5 | 0.77 | 2.6 | 92 | 3.4 | 96 | 2.8 |
| DL9TH | 16.04 | 250 | 124 | 7 | 0.031 | 0.10 | 89 | 2.8 | 91 | 1.8 |
| TOTM | 20.97 | 305 | 193 | 16 | 0.088 | 0.29 | 119 | 4.7 | 123 | 2.3 |
| DEHP-$d_4$ | 14.53 | 171 | 153 | 4 | | | | | | |

(GC conditions)

Device: Gas chromatograph TRACE GC (trade name, manufactured by Thermo Fisher Scientific Inc.)
Inlet and transfer line temperature: 250°C
Splitless Injection
Injection volume: 1 μL
Oven temperature: 60°C (2 minutes retained) → 20°C/min → 310°C (10 minutes retained)
Carrier gas: He (1mL/min)
Column: DB-5MS (length of 30 m, inner diameter of 0.25 mm, film thickness of 0.25 μm, manufactured by Agilent Technologies, Inc.)

(MS-MS conditions)

Equipment: Quantum XLS (trade name, manufactured by Thermo Fisher Scientific, Inc.)
Ion source temperature: 250°C
EI: 70 eV
Collision gas: Ar (1.0 mTorr)

According to the blending ratio described in Table 6 below, each component was sequentially added and kneaded at room temperature to prepare each resin composition.

The resulting resin composition sample was formed into a sheet-form by using a heat press machine, followed by cutting into a size of 100 mm × 100 mm × 0.45 mm thick to prepare a resin sheet (Samples 12 to 15 and 17 to 20). The conditions of heat press were heating temperature of 180°C, a pressing time of 2 minutes and a pressing pressure of 20 MPa.

[Table 6]

TABLE 6 (Unit: parts by mass)

| Component | | Sample 12 | Sample 13 | Sample 14 | Sample 15 | Sample 17 | Sample 18 | Sample 19 | Sample 20 |
|---|---|---|---|---|---|---|---|---|---|
| Polyvinyl Chloride Resin (polymerization degree = 1,700) | | 100 | | | | - | | | |
| Polyvinyl Chloride Resin (polymerization degree = 1,300) | | - | | | | 100 | | | |
| Epoxidized Soybean Oil (ESBO) | | 8.0 | | | | 8.0 | | | |
| Processing Auxiliary (*1) | | 0.5 | | | | 0.5 | | | |
| Plasticizer | DL9TH | 55 | - | - | - | 55 | - | - | - |
| | TOTM | - | 66 | - | - | - | 66 | - | - |
| | DINCH | - | - | 60.5 | - | - | - | 60.5 | - |
| | DEHP | - | - | - | 55 | - | - | - | 55 |
| *1: Processing auxiliary: heat stabilizer, lubricant | | | | | | | | | |

As to each of the resin sheet according to Samples 12 to 15, the hemolysis rate and plasticizer elution amount

in the red cells concentrate prepared by using MAP solution as the red cells preservation were confirmed. A test piece prepared by cutting each resin sheet into a predetermined size (6.4 $cm^2$) was immersed in 5 mL of the red cells concentrate (hematocrit value of 59%) at 4°C, and the red cells concentrate was collected over time, thereby calculating the hemolysis rate and measuring the plasticizer elution amount. As a control, the same experiments were carried out for Sample 16 without immersing the PVC sheet.

On the occasion of calculation of the hemolysis rate, 1 mL of phosphate buffered saline (PBS) was added to 50 μL of the red cells concentrate collected, centrifugation was performed, the absorbance at 415 nm of the supernatant thereof (100 μL) was measured by a plate reader, and the hemolysis rate of each of the samples (Samples 12 to 15) was calculated according to the calculation formula shown below. Sample 16 was taken as a negative control, and in a positive control, Milli-Q water was used instead of PBS.

$$\text{Hemolysis rate (\%)} = (A_T - A_N)/(A_P - A_N) \times 100$$

$A_T$: Absorbance of each sample (Samples 12 to 15)
$A_N$: Mean absorbance of negative control (Sample 16)
$A_P$: Mean absorbance of positive control

On the occasion of the measurement of plasticizer elution amount, 1 mL of an aqueous 1% NaCl solution, 0.1 μg of DEHP-d4 and 1 mL of hexane were added to 50 μL of the red cells concentrate collected, followed by shaking for 15 minutes and then centrifugation. The resulting hexane layer was dehydrated with anhydrous $Na_2SO_4$ and then subjected to GC-MS/MS analysis (DB-5MS column: 0.25 mm × 30 m, film thickness of 0.25 μm) to be measured. LOD (Limit of Detection: detection limit) and LOQ (Limit of Quantification: lower limit of quantification) were calculated by using the program TOCO (Total Optimization of Chemical Operations) practicing FUMI theory.

The results of the hemolysis rate ate shown in Fig. 5. Further, the results of the plasticizer elution amount are shown in Table 7. In Table 7, the unit of the value is μg/mL, and sample number was set to N = 2 and plasticizer elution amount of each was measured. In Table 7, "tr" means "trace amount less than LOQ".

[Table 7]

TABLE 7: Plasticizer Elution Amount In Case Of Using MAP Solution (Unit: μg/mL)

| | Plasticizer | After 7 Days | After 14 Days | After 21 Days | After 28 Days | After 35 Days | After 42 Days | After 49 Days |
|---|---|---|---|---|---|---|---|---|
| Sample 12 | DL9TH | 0.84 | 2.0 | 3.8 | 2.7 | 4.1 | 4.3 | 5.8 |
| | | 0.68 | 1.8 | 3.2 | 3.7 | 3.9 | 4.1 | 5.3 |
| Sample 13 | TOTM | 0.013 | 0.021 | 0.040 | 0.046 | 0.048 | 0.013 | 0.040 |
| | | 0.014 | 0.026 | 0.036 | 0.060 | 0.043 | 0.038 | 0.054 |
| Sample 14 | DINCH | 2.0 | 3.3 | 5.1 | 6.1 | 5.5 | 6.5 | 6.9 |
| | | 1.9 | 3.1 | 4.8 | 4.4 | 6.7 | 5.1 | 6.4 |
| Sample 15 | DEHP | 12 | 12 | 20 | 19 | 19 | 19 | 30 |
| | | 11 | 15 | 21 | 26 | 25 | 23 | 26 |
| Sample 16 | - | 0.010 | 0.016 | tr | tr | tr | 0.046 | tr |
| | | 0.022 | 0.013 | tr | tr | tr | 0.023 | tr |

Further, in the same way as above, as to each of the resin sheet according to Samples 17 to 20, the hemolysis rate and plasticizer elution amount in the red cells concentrate prepared by using SAGM solution as the red cells preservation were confirmed. A test piece prepared by cutting each resin sheet into a predetermined size (6.4 $cm^2$) was immersed in 5 mL of the red cells concentrate (hematocrit value of 59%) at 4°C, and the red cells concentrate was collected over time, thereby calculating the hemolysis rate and measuring the plasticizer elution amount. As a control, the same experiments were carried out for Sample 21 without immersing the PVC sheet.

The results of the hemolysis rate ate shown in Fig. 6. Further, the results of the plasticizer elution amount are shown in Table 8. In Table 8, the unit of the value is μg/mL, and sample number was set to N = 2 and plasticizer elution amount of each was measured. In Table 8, "tr" means "trace amount less than LOQ".

[Table 8]

TABLE 8: Plasticizer Elution Amount In Case Of Using SAGM Solution (Unit: μg/mL)

| | Plasticizer | After 7 Days | After 14 Days | After 21 Days | After 28 Days | After 35 Days | After 42 Days | After 49 Days |
|---|---|---|---|---|---|---|---|---|
| Sample 17 | DL9TH | 0.86 | 2.0 | 3.7 | 2.7 | 5.1 | 6.1 | 4.6 |
| | | 0.95 | 2.5 | 4.6 | 3.4 | 5.7 | 5.8 | 4.9 |
| Sample 18 | TOTM | 0.007 | 0.030 | 0.085 | 0.068 | 0.13 | 0.040 | 0.062 |
| | | 0.012 | 0.038 | 0.059 | 0.079 | 0.11 | 0.047 | 0.090 |
| Sample 19 | DINCH | 1.1 | 2.7 | 4.4 | 5.5 | 5.4 | 6.9 | 7.5 |
| | | 1.2 | 2.6 | 4.1 | 4.0 | 5.1 | 6.8 | 7.9 |
| Sample 20 | DEHP | 8.2 | 15 | 19 | 19 | 23 | 19 | 21 |
| | | 8.2 | 16 | 21 | 20 | 25 | 21 | 22 |
| Sample 21 | - | 0.022 | 0.020 | tr | tr | tr | 0.044 | tr |
| | | 0.011 | 0.068 | tr | tr | tr | tr | tr |

From the results of Fig. 5 and Fig. 6, it can be seen that in the case of using any of MAP solution and SAGM solution as the blood preservation solution, although DL9TH (Samples 12 and 17) exhibits lower hemolysis suppression effect than DEHP (Samples 15 and 20), it exhibits higher hemolysis suppression effect than TOTM used as a medical plasticizer (Samples 13 and 18) and the control (Samples 16 and 21) and has the hemolysis suppression effect equivalent to or higher than that of DINCH (Samples 14 and 19).

Further, from the results of Table 7 and Table 8, it can be seen that the elution amount of DL9TH (Samples 12 and 17) is approximately 1/10 of the elution amount of DEHP (Samples 15 and 20) and almost the same as the elution amount of DINCH (Samples 14 and 19).

Here, according to prior Japanese patent application (No. 2013-104082) (JP-A-2014-223182) by the present inventors, it is confirmed that bis(2-ethylhexyl) 4-cyclohexene-1,2-dicarboxylate (DOTH) as a plasticizer has the hemolysis suppression effect equivalent to or higher than that of DEHP and it exhibits a larger elution amount from the sheet even in a smaller blending amount than that of DEHP. Therefore, it is considered that by blending DL9TH and DOTH in combination, the hemolysis suppression effect equivalent to that of DEHP can be expected and it is possible to provide one which can satisfy the excellent hemolysis suppression effect in addition to the excellent low temperature impact resistance and safety.

<Example 5: Confirmation test of low temperature impact resistance>

As to DL9TH and DINCH in which the hemolysis suppression effect and the elution into blood are recognized to be equivalent to each other in Example 4, the impact resistance at low temperature storage in the case of combining with DOTH having a cytoprotective function was confirmed.

According to the blending ratio shown in Table 9 below, each component was sequentially added and kneaded at room temperature to prepare each resin composition.

Using each of the resin composition, a resin sheet having a width of 15 cm and a thickness of 0.45 mm was prepared (Samples 22 and 23).

The blending amount of plasticizer in the resin composition in Table 9 is such an amount that flexibility of the resulting resin sheets is almost equal and is such an amount that 100% modulus value measured by the tensile tester described in Example 1 is about 10 MPa.

[Table 9]

TABLE 9 (Unit: parts by mass)

| Component | | Sample 22 | Sample 23 |
|---|---|---|---|
| Polyvinyl Chloride Resin (polymerization degree = 1,300) | | 100 | 100 |
| Epoxidized Soybean Oil (ESBO) | | 8.0 | 8.0 |
| Processing Auxiliary (* 1) | | 0.5 | 0.5 |
| Plasticizer | DL9TH | 11 | - |
| | DINCH | - | 11 |
| | DOTH | 40 | 40 |
| * 1: Processing auxiliary: heat stabilizer, lubricant | | | |

Using the resulting resin sheet, 5% elastic moduli in the stretching direction (MD) and in the stretching vertical direction (TD) of the resin sheet were measured in -20°C environment in the same manner as in Example 1. The test was performed 5 times and the average value thereof was calculated. The results are shown in Table 10.

[Table 10]

TABLE 10

| | | Sample 22 | Sample 23 |
|---|---|---|---|
| 5% Elastic Modulus at -20°C ($N/mm^2$) | MD | 323.3 | 371.7 |
| | TD | 319.2 | 357.1 |

From the results of Table 10, it can be seen that Sample 22 in which DL9TH is combined with DOTH has low 5% elastic modulus in -20°C environment and is excellent in the low temperature impact resistance in comparison with Sample 23 in which DINCH is combined with DOTH.

## Claims

1. A bag for medical use made of a resin composition comprising a vinyl chloride resin and, as plasticizers, at least a 4-cyclohexene-1,2-dicarboxylic acid dinonyl ester represented by the formula (1) shown below:

[Chem. 1]

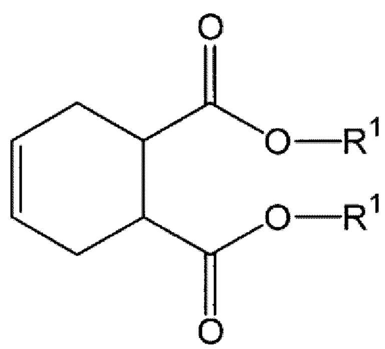

(1)

(in the formula (1), $R^1$s each independently represent a straight-chain or branched nonyl group), and a bis(2-ethylhexyl)-4-cyclohexene-1,2-dicarboxylate.

2. The bag for medical use according to Claim 1, wherein from 1 to 80 parts by mass of the 4-cyclohexene-1,2-dicarboxylic acid dinonyl ester is blended with 100 parts by mass of the vinyl chloride resin.

3. The bag for medical use according to Claim 1 or 2, wherein the vinyl chloride resin has a polymerization degree of from 480 to 4,100.

4. The bag for medical use according to Claim 1, wherein from 1 to 80 parts by mass of the bis(2-ethylhexyl)-4-cyclohexene-1,2-dicarboxylate is blended with 100 parts by mass of the vinyl chloride resin.

5. A use of the bag for medical use according to any one of Claims 1 to 4 as a blood bag for storing a blood component.

## Patentansprüche

1. Beutel zur medizinischen Verwendung, hergestellt aus einer Harzzusammensetzung, umfassend ein Vinylchloridharz und, als Weichmacher, mindestens einen 4-Cyclohexen-1,2-dicarbonsäuredinonylester, dargestellt durch die nachstehend gezeigte Formel (1):

[Chem. 1]

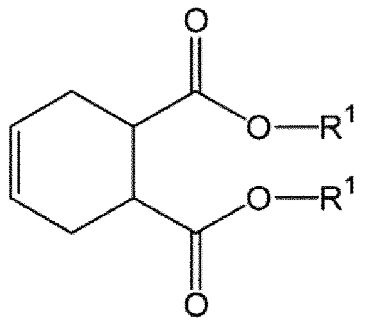

(1)

wobei in der Formel (1) die $R^1$ jeweils unabhängig voneinander eine geradkettige oder verzweigte Nonylgruppe darstellen, und ein Bis(2-ethylhexyl)-4-cyclohexen-1,2-dicarboxylat.

2. Beutel zur medizinischen Verwendung gemäß Anspruch 1, wobei 1 bis 80 Masseteile des 4-Cyclohexen-1,2-dicarbonsäuredinonylesters mit 100 Masseteilen des Vinylchloridharzes vermischt sind.

3. Beutel zur medizinischen Verwendung gemäß Anspruch 1 oder 2, wobei das Vinylchloridharz einen Polymerisationsgrad von 480 bis 4.100 aufweist.

4. Beutel zur medizinischen Verwendung gemäß Anspruch 1, wobei 1 bis 80 Masseteile des Bis(2-ethylhexyl)-4-cyclohexen-1,2-dicarboxylats mit 100 Masseteilen des Vinylchloridharzes vermischt sind.

5. Verwendung des Beutels zur medizinischen Verwendung gemäß einem der Ansprüche 1 bis 4 als Blutbeutel zum Aufbewahren einer Blutkomponente.

## Revendications

1. Poche à usage médical en une composition de résine comprenant une résine de chlorure de vinyle et, en tant que plastifiants, au moins un ester dinonylique de l'acide 4-cyclohexène-1,2-dicarboxylique représenté par la formule (1) présentée ci-dessous :

[Chem. 1]

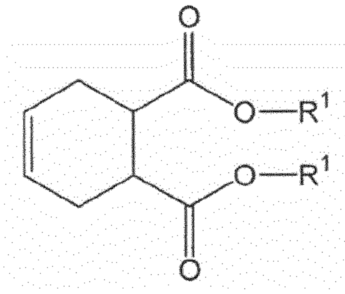

(1)

(dans la formule (1), chaque $R^1$ représente indépendamment un groupe nonyle linéaire ou ramifié), et un bis(2-éthylhexyl)-4-cyclohexène-1,2-dicarboxylate.

2. Poche à usage médical selon la revendication 1, dans laquelle de 1 à 80 parties en masse de l'ester dinonylique de l'acide 4-cyclohexène-1,2-dicarboxylique sont mélangées avec 100 parties en masse de la résine de chlorure de vinyle.

3. Poche à usage médical selon la revendication 1 ou 2, dans laquelle la résine de chlorure de vinyle a un degré de polymérisation de 480 à 4 100.

4. Poche à usage médical selon la revendication 1, dans laquelle de 1 à 80 parties en masse du bis(2-éthylhexyl)-4-cyclohexène-1,2-dicarboxylate sont mélangées avec 100 parties en masse de la résine de chlorure de vinyle.

5. Utilisation de la poche à usage médical selon l'une quelconque des revendications 1 à 4 en tant que poche de sang pour stocker un composant sanguin.

Fig. 1

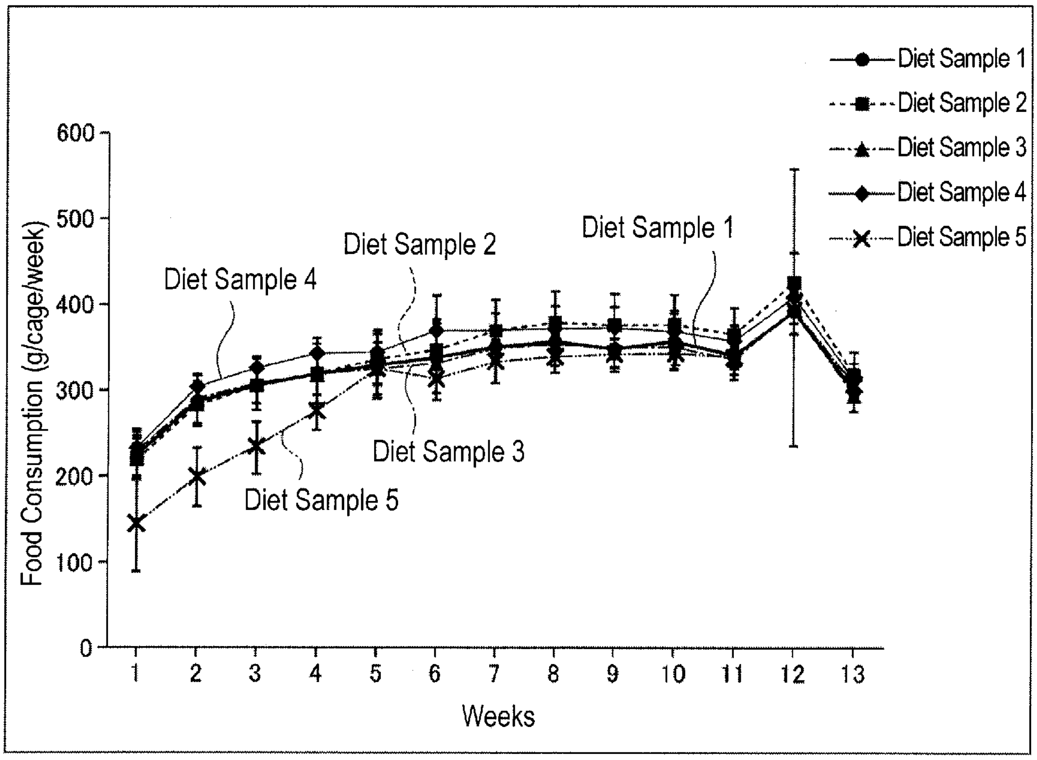
Diet Sample 1
Diet Sample 2
Diet Sample 3
Diet Sample 4
Diet Sample 5
Food Consumption (g/cage/week)
0
100
200
300
400
500
600
Weeks
1 2 3 4 5 6 7 8 9 10 11 12 13

Fig. 2

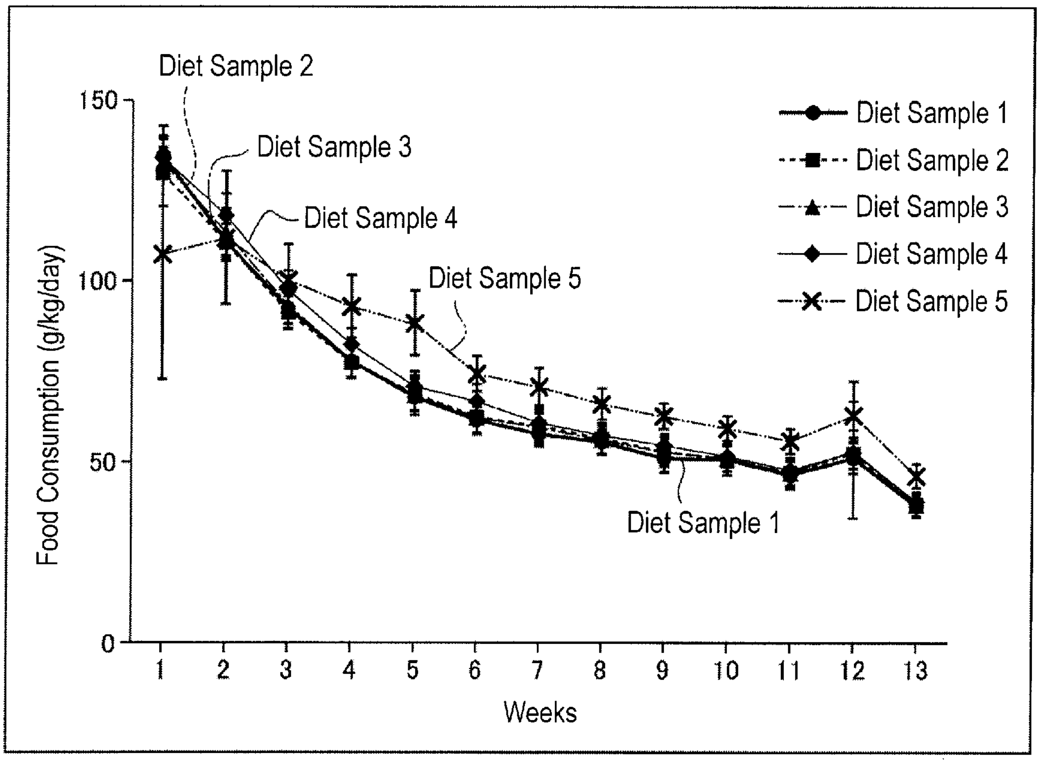
Diet Sample 1
Diet Sample 2
Diet Sample 3
Diet Sample 4
Diet Sample 5
Food Consumption (g/kg/day)
0
50
100
150
Weeks
1 2 3 4 5 6 7 8 9 10 11 12 13

Fig. 3

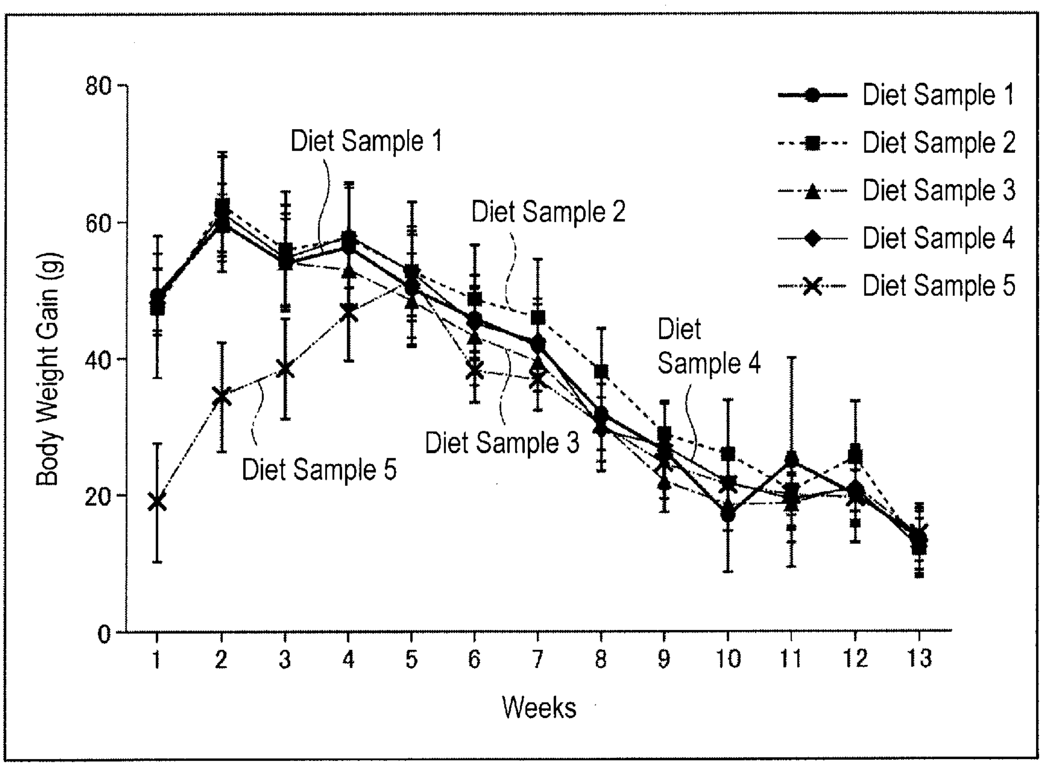
Body Weight Gain (g)
80
60
40
20
0
1
2
3
4
5
6
7
8
9
10
11
12
13
Weeks
Diet Sample 1
Diet Sample 2
Diet Sample 3
Diet Sample 4
Diet Sample 5
Diet Sample 1
Diet Sample 2
Diet Sample 3
Diet Sample 4
Diet Sample 5

Fig. 4

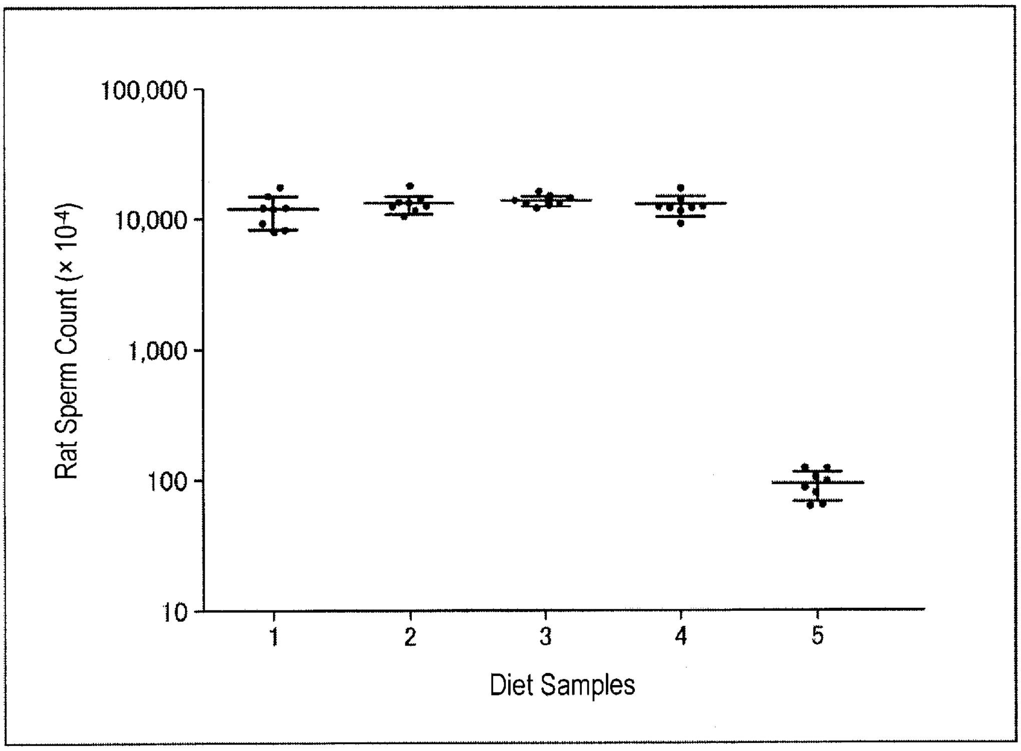
Rat Sperm Count (× 10⁻⁴)
100,000
10,000
1,000
100
10
1
2
3
4
5
Diet Samples

Fig. 5

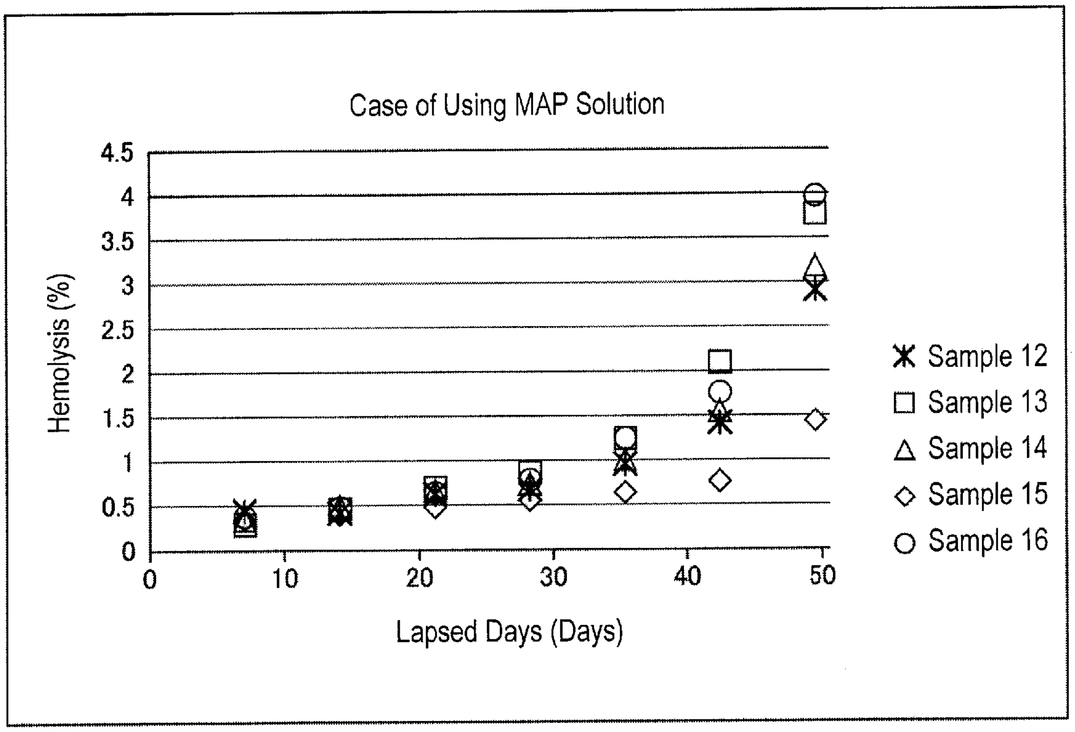
Case of Using MAP Solution
Hemolysis (%)
4.5
4
3.5
3
2.5
2
1.5
1
0.5
0
0
10
20
30
40
50
Lapsed Days (Days)
Sample 12
Sample 13
Sample 14
Sample 15
Sample 16

Fig. 6

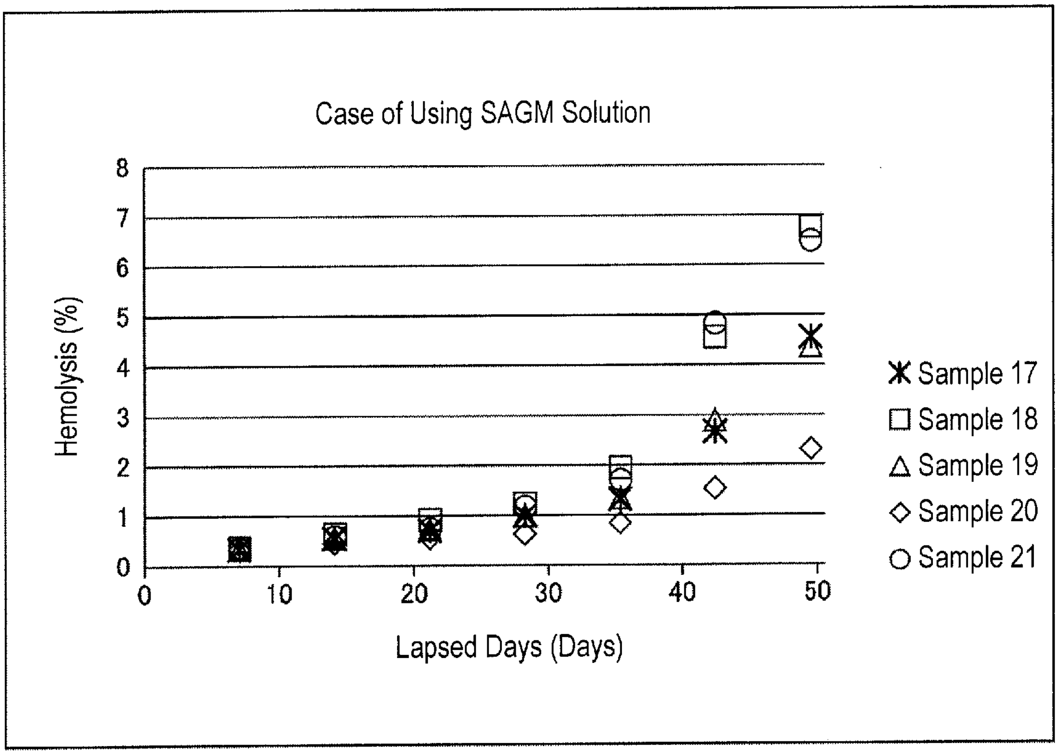
Case of Using SAGM Solution
Hemolysis (%)
8
7
6
5
4
3
2
1
0
0
10
20
30
40
50
Lapsed Days (Days)
Sample 17
Sample 18
Sample 19
Sample 20
Sample 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005193013 A
- JP 2014080631 A
- EP 3124540 A
- JP 2013104082 A
- JP 2014223182 A


### Non-patent literature cited in the description


- **LARRY J. DUMONT et al.** Exploratory in vitro study of red blood cell storage containers formulated with an alternative plasticizer. *Transfusion,* 2012, vol. 52 (7), 1439-1445
- **YUJI HAISHIMA et al.** Study on the effect of plasticizers to red cells survival. *The 33rd Annual Meeting of the Japanese Society for Biomaterials, Poster Presentation Summary,* November 2011, 79